# FASCICULE DE BREVET EUROPEEN

(11) **EP 0 690 586 B1**
(45) Date de publication et mention de la délivrance du brevet: **14.08.2002**
(21) Numéro de dépôt: 95401540.0
(22) Date de dépôt: 28.06.1995
(51) Int. Cl.: H04B 1/16

(54) **Dispositif de réception de signaux notamment de signaux radioélectriques, à deux récepteurs**
Funkempfangsgerät mit zwei Empfängern
Radio receiving apparatus with two receivers

(30) Priorité: 29.06.1994 FR 9408020
(43) Date de publication de la demande: 03.01.1996
(73) Titulaire: ATRAL, F-38190 Crolles (FR)
(72) Inventeur: Cariou, Laurent, F-38240 Meylan (FR); Debever, Bertrand, F-38660 La Terasse (FR)
(74) Mandataire: Casalonga, Axel

(56) Documents cités:
- EP-A- 0 227 458
- CH-A- 680 824

## Description

La présente invention concerne un perfectionnement aux dispositifs de réception de signaux, notamment de signaux radioélectriques.

Le document CH-A-680 824 décrit un dispositif de réception à deux récepteurs dans lequel un interrupteur permet de régler la tension aux bornes de ces récepteurs à deux valeurs de fonctionnement différentes.

La présente invention a plus particulièrement pour objet un dispositif de réception sur au moins deux canaux à des fréquences porteuses différentes pour chacun de ces canaux, qui comprend au moins deux récepteurs sensibles respectivement auxdites fréquences porteuses et alimentés en énergie électrique continue, respectivement entre au moins deux bornes.

Un but de la présente invention est de proposer un dispositif de réception à consommation en énergie électrique réduite. Un autre but de la présente invention est de proposer un dispositif de réception permettant d'augmenter les chances de réception des signaux même lorsque l'énergie électrique disponible dans la source d'alimentation des récepteurs vient à faiblir, ce qui est le cas lorsque l'alimentation est réalisée par des piles ou des batteries.

Dans une application particulière, le dispositif de réception de l'invention peut avantageusement être utilisé dans les systèmes de transmission alimentés sur piles tels que systèmes de télécommande autonomes, systèmes d'alarme pour la protection des personnes et des biens, dans lesquels les informations sont transmises entre les différents appareils ou modules autonomes de ces systèmes par voie radioélectrique sur deux canaux de transmission indépendants à fréquences porteuses différentes, ces appareils ou modules étant alimentés par piles ou batteries.

Selon un objet de l'invention, les deux récepteurs précités sont montés en série entre les deux pôles d'une source commune d'alimentation en énergie électrique continue, de telle sorte que l'une des bornes de l'un desdits récepteurs est reliée à l'un des pôles de la source d'alimentation, que l'une des bornes de l'autre récepteur est reliée à l'autre pôle de la source d'alimentation et que leurs autres bornes sont reliées entre elles. Ainsi, le courant traversant l'un des récepteur traverse en tout ou en partie l'autre récepteur.

Selon l'invention, la tension d'alimentation peut avantageusement être répartie entre les deux récepteurs montés en série à l'aide d'un pont diviseur de tension.

Selon l'invention, le dispositif de réception peut avantageusement comprendre un moyen d'asservissement en tension des bornes communes précitées desdits récepteurs.

Selon un autre objet de l'invention, le dispositif de réception comprend de préférence un premier régulateur de tension monté de façon à réguler, à une première valeur déterminée, la tension entre les bornes précitées desdits récepteurs reliées aux pôles de la source d'alimentation et un second régulateur de tension monté de façon à réguler, à une deuxième valeur prédéterminée, la tension entre la borne commune précitée desdits récepteurs et la borne du récepteur reliée au pôle de plus faible potentiel de la source d'alimentation, la première valeur prédéterminée précitée étant supérieure à la seconde valeur prédéterminée précitée.

Selon l'invention, le second régulateur de tension précité peut être directement relié au pôle de la source d'alimentation, en amont du premier régulateur précité.

Selon une autre variante de l'invention, le second régulateur précité peut être relié à la source d'alimentation au travers du premier régulateur précité.

Selon l'invention, le dispositif de réception peut avantageusement comprendre un moyen de commande commun auxdits récepteurs de façon à les commander simultanément en mode échantillonné réception/sommeil.

Dans une variante, au moins l'un des récepteurs précités peut être un récepteur superhétérodyne. Dans une autre variante, l'un au moins desdits récepteurs peut être un récepteur à super réaction.

Selon l'invention, lesdits récepteurs peuvent avantageusement être des récepteurs d'ondes électromagnétiques.

Selon un autre objet de l'invention, le dispositif de réception, peut comprendre en outre des moyens pour réguler la tension entre lesdites bornes desdits récepteurs à deux valeurs déterminées de fonctionnement différentes, dont l'une est inférieure à l'autre.

Selon un autre objet de l'invention, chaque récepteur peut avantageusement être muni de son propre moyen de régulation de sa tension de fonctionnement.

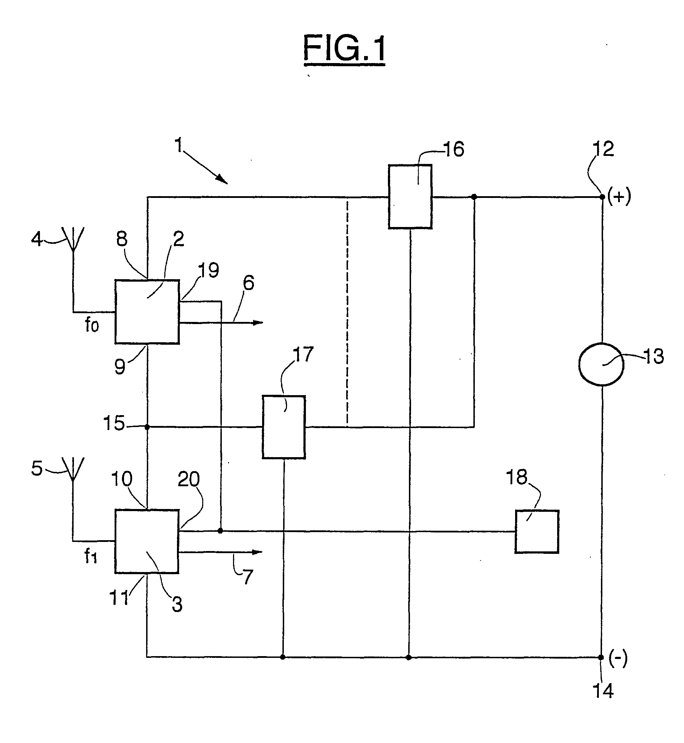

La présente invention sera mieux comprise à l'étude de dispositifs de réception de signaux radioélectriques, décrits à titre d'exemples non limitatifs et illustrés respectivement par les figures 1, 2 et 3 annexées.

Le dispositif de réception représenté sur la figure 1, repéré d'une manière générale par la référence 1, comprend deux récepteurs de signaux radioélectriques 2 et 3, adaptés pour recevoir séparément et indépendamment l'un par rapport à l'autre, les signaux radioélectriques captés par respectivement des antennes 4 et 5 sur deux canaux indépendants caractérisés par des fréquences porteuses différentes fo et f1 et susceptibles de fournir, respectivement à leur sortie de données 6 et 7, ces signaux reçus ou des signaux correspondants.

En vue de leur alimentation en énergie électrique continue, les récepteurs 2 et 3 présentent des bornes 8, 9 et 10, 11, les bornes 8 et 10 étant de même polarité, les bornes 9 et 11 étant de même polarité opposée à celle des bornes 8 et 10.

Du point de vue de leur alimentation en tension électrique continue, les récepteurs 2 et 3 sont montés en série entre le pôle (+) 12 d'une source d'alimentation en énergie électrique continue 13 et la masse ou pôle (-) 14 de cette source 13, cette source d'alimentation étant par exemple une pile ou une batterie, ou un assemblage de piles ou batteries.

Dans une variante, la borne 8 du récepteur 2 est reliée au pôle (+) 12 de la source d'alimentation, la borne 11 du récepteur 3 est reliée au pôle (-) 14 de la source d'alimentation 13 et les bornes 9 et 10 des récepteurs 2 et 3 sont reliées entre elles pour constituer une borne commune intermédiaire 15.

Dans une seconde variante préférée, la borne 8 du récepteur 2 de plus fort potentiel est reliée à la sortie régulée d'un régulateur de tension 16 dont l'entrée non régulée est reliée au pôle (+) de la source d'alimentation 13 et par ailleurs, à titre de référence, au pôle (-) 14 de la source d'alimentation 13. Ce régulateur 16 est adapté pour que la tension entre la borne 8 de plus fort potentiel du récepteur 2 et la borne 11 de plus faible potentiel du récepteur 3 soient maintenues à une valeur déterminée et constante U1.

La borne commune 15 entre les récepteurs 2 et 3 est reliée au pôle (+) 12 de la source d'alimentation 13 au travers d'un régulateur 17 relié par ailleurs, à titre de référence, au pôle (-) 14 de la source d'alimentation 13. Ce régulateur 17 permet de maintenir la tension entre la borne 10 de plus fort potentiel et la borne 11 de plus faible potentiel du récepteur 3 à une valeur déterminée et constante U2.

Ainsi, tant que la tension Uo entre les pôles 12 et 14 de la source d'alimentation 13 est supérieure à la tension U1 précitée délivrée par le régulateur 16, les récepteurs 2 et 3 sont alimentés convenablement, la tension aux bornes 10 et 11 du récepteur 3 étant sensiblement égale à la valeur U2 précitée et la tension entre les bornes 8 et 9 du régulateur 2 étant sensiblement égale à la différence entre les tensions U1 et U2 précitées, soit U3. Les récepteurs 2 et 3 fonctionnent alors normalement et fournissent à leurs sorties respectives 6 et 7 les signaux détectés et captés par leurs antennes respectives 4 et 5.

La source d'alimentation 13 se déchargeant au fur et à mesure de son utilisation, la tension Uo entre ses pôles 12 et 14 diminue.

Lorsque cette tension Uo passe en-dessous de la tension U1 précitée, tout en restant en-dessus de la tension U2 précitée, la tension entre les bornes 10 et 11 du récepteur 3 reste réglée sensiblement à la valeur U2 précitée. Ainsi, les éventuels signaux disponibles à la sortie de signaux reçus 7 du récepteur 3 correspondent normalement aux signaux captés par l'antenne 5 sur la fréquence f1 et détectés par le récepteur 3.

Par contre, la tension entre les bornes 8 et 9 du récepteur 2 devient inférieure à sa tension normale de fonctionnement U3. Il en résulte que le récepteur 2 perd au moins en partie ses capacités de réception et que les éventuels signaux disponibles à sa sortie de signaux 6 ne peuvent plus être considérés comme correspondants à des signaux reçus sur la fréquence fo par l'antenne 4.

Le dispositif de réception 1 qui vient d'être décrit est particulièrement intéressant lorsque les signaux susceptibles d'apparaître sur les fréquences fo et f1 contiennent la même information à recevoir. En effet, l'information à recevoir peut être reçue convenablement et indépendamment par les récepteurs 2 et 3 lorsque la tension Uo de la source d'alimentation 13 reste supérieure à la tension régulée U1 précitée et, avantageusement, l'information à recevoir peut être reçue convenablement par uniquement le récepteur 3 lorsque le récepteur 2 n'est plus en état de fonctionnement convenable, le récepteur 2 étant avantageusemnt adapté pour fonctionner sous une tension régulée à une valeur U2 relativement faible par rapport à la tension Uo de la source d'alimentation 13 en pleine charge.

Le dispositif de réception 1 présente par ailleurs l'avantage d'être peu consommateur en énergie électrique du fait notamment que ses récepteurs 2 et 3 sont montés en série et traversés par le même courant.

Dans une autre exécution, la borne commune 15 pourrait être reliée au travers du régulateur de tension 17 à la sortie du régulateur de tension 16, comme représenté en traits tirés sur la figure 1. Ce régulateur de tension 16 serait alors soumis sur son entrée non régulée à une tension déjà régulée par le régulateur de tension 16, améliorant ainsi la stabilité de la tension U2 fournie au récepteur 3.

Le dispositif de réception 1 comprend par ailleurs un circuit de commande 18, soumis à une horloge, permettant la commande simultanée en mode échantillonné réception/sommeil des récepteurs 2 et 3 par leurs entrées respectives 19 et 20. Ce mode de fonctionnement simultané en réception/sommeil des récepteurs 2 et 3 permet également de réduire la consommation moyenne d'énergie électrique et ainsi d'augmenter la durée de vie de la source d'alimentation 13.

Dans une variante, le régulateur 16 peut être omis en ne conservant que le régulateur 17 dans le cas ou le récepteur 2 incorpore son propre régulateur interne ou fonctionne sur une grande plage de tension. Dans une autre variante, chacun des récepteurs 2 et 3 sous forme de modules ou de circuits intégrés peuvent comprendre leur propres régulateurs internes.

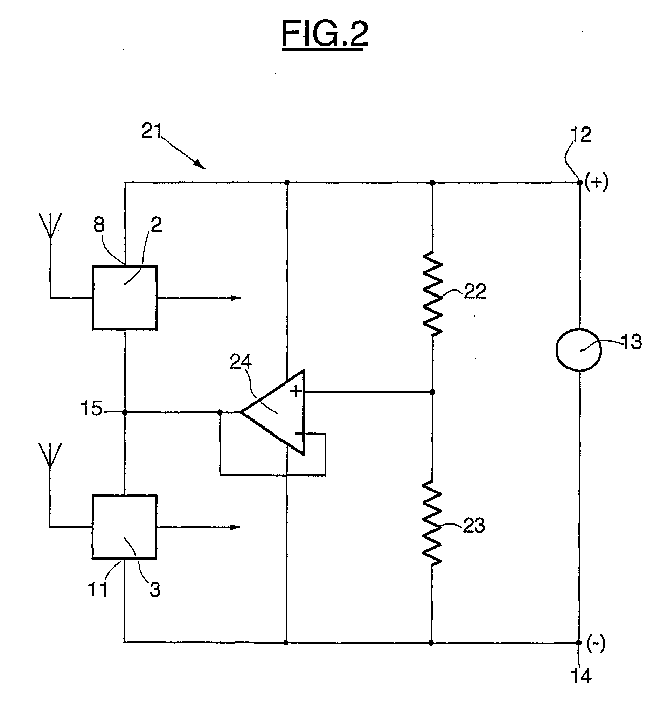

Dans le dispositif de réception de signaux radioélectriques 21 représenté en variante sur la figure 2, les régulateurs 16 et 17 de l'exemple précédents sont supprimés. Les bornes 12 et 14 de la source d'alimentation 13, respectivement reliées directement aux bornes 8 et 11 des récepteurs 2 et 3, sont reliées par un pont diviseur constiué par deux résistances en série 22 et 23 dont le point commun est rélié aux bornes communes 15 des récepteurs 2 et 3 au travers d'un amplificateur opérationnel 24, permettant ainsi de répartir la tension d'alimentation entre les récepteurs 2 et 3 qui incorporent chacun un moyen interne de régulation de tension.

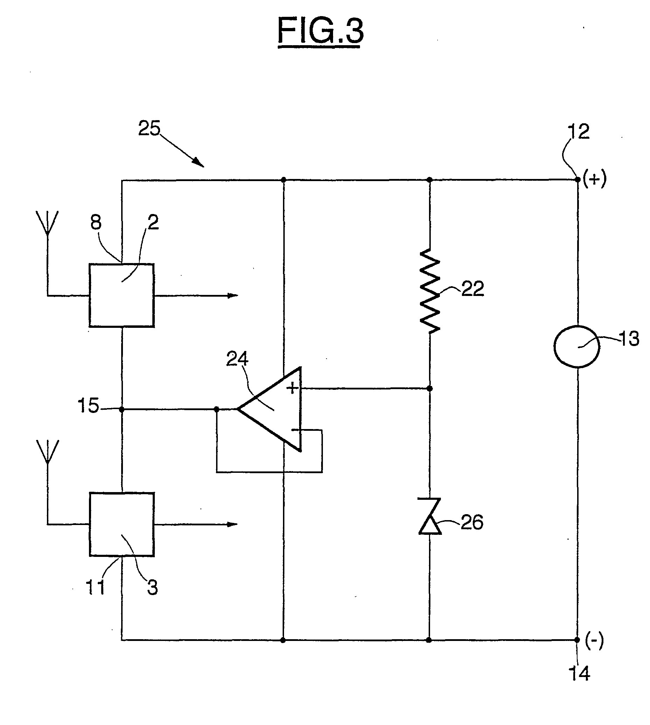

Dans le dispositif de réception de signaux radioélectriques 25 représenté sur la figure 3 en variante de la figure 2, l'une des branches du pont diviseur précité, dans l'exemple la résistance 23, est remplacée par une référence de tension stable constituée par une diode Zener 26, de façon à privilégier le fonctionnement de l'un des récepteur en cas d'affaiblissement ou de baisse de tension de la source d'alimentation continue 13. Dans ce cas, la branche formée par la résistance 22 peut avantageusement être remplacée par une source de courant constant.

Les récepteurs 2 et 3 peuvent être choisis parmi l'ensemble des récepteurs connus sous forme de modules de circuits intégrés. Ils seront de préférence du type superhétérodyne ou à super réaction, l'un ou l'autre ou les deux.

La présente invention ne se limite pas à l'exemple ci-dessus décrit. Bien des variantes de réalisation sont possibles sans sortir du cadre défini par les revendications annexées.

## Revendications

1. Dispositif de réception de signaux, notamment de signaux radioélectriques, sur au moins deux canaux **caractérisés par** des fréquences porteuses différentes pour chacun de ces canaux, comprenant au moins deux récepteurs sensibles respectivement auxdites fréquences porteuses et alimentés, respectivement entre au moins deux bornes, en une énergie électrique continue, **caractérisé par le fait que** les deux récepteurs précités (2, 3) sont montés en série entre les deux pôles d'une source commune (13) d'alimentation en énergie électrique continue, de telle sorte que l'une des bornes de l'un desdits récepteurs est reliée à l'un des pôles de la source d'alimentation, que l'une des bornes de l'autre récepteur est reliée à l'autre pôle de la source d'alimentation et que leurs autres bornes sont reliées entre elles.

2. Dispositif de réception selon la revendication 1, **caractérisé par le fait que** la tension d'alimentation est répartie entre les deux récepteurs montés en série à l'aide d'un pont diviseur de tension.

3. Dispositif de réception selon l'une des revendications 1 et 2, **caractérisé par le fait qu'**il comprend un moyen d'asservissement en tension des bornés communes précitées desdits récepteurs.

4. Dispositif de réception selon l'une quelconque des revendications précédentes, **caractérisé par le fait que** chaque récepteur (2, 3) est muni de son propre moyen de régulation de sa tension de fonctionnement.

5. Dispositif de réception selon l'une quelconque des revendications précédentes, **caractérisé par le fait qu'**il comprend un premier régulateur de tension (16) monté de façon à réguler, à une première valeur déterminée, la tension entre les bornes précitées desdits récepteurs reliées aux pôles de la source d'alimentation et un second régulateur de tension (17) monté de façon à réguler, à une deuxième valeur prédéterminée, la tension entre la borne commune précitée desdits récepteurs et la borne du récepteur reliée au pôle de plus faible potentiel de la source d'alimentation, la première valeur prédéterminée précitée étant supérieure à la seconde valeur prédéterminée précitée.

6. Dispositif de réception selon la revendication 5, **caractérisé par le fait que** le second régulateur de tension précité (17) est directement relié au pôle de la source d'alimentation, en amont du premier régulateur précité.

7. Dispositif de réception selon la revendication 5, **caractérisé par le fait que** le second régulateur précité (17) est relié à la source d'alimentation au travers du premier régulateur précité.

8. Dispositif de réception selon l'une quelconque des revendications précédentes, **caractérisé par le fait qu'**il comprend un moyen de commande (18) commun auxdits récepteurs (2, 3) de façon à les commander simultanément en mode échantillonné réception/sommeil.

9. Dispositif de réception selon l'une quelconque des revendications précédentes, **caractérisé par le fait qu'**au moins l'un des récepteurs précités est un récepteur super-hétérodyne.

10. Dispositif de réception selon l'une quelconque des revendications précédentes, **caractérisé par le fait que** l'un au moins desdits récepteurs est un récepteur à super-réaction.

11. Dispositif de réception selon l'une quelconque des revendications précédentes, **caractérisé par le fait que** lesdits récepteurs (2, 3) sont des récepteurs d'ondes électromagnétiques.

12. Dispositif de réception selon la revendication 1, **caractérisé par le fait qu'**il comprend des moyens pour réguler la tension entre lesdites bornes desdits récepteurs (2, 3) à deux valeurs déterminées de fonctionnement différentes, dont l'une est inférieure à l'autre.

## Patentansprüche

1. Empfangsvorrichtung für den Empfang von Signalen, insbesondere Funksignalen, auf wenigstens zwei Kanälen, die durch unterschiedliche Trägerfrequenzen für jeden dieser Kanäle **gekennzeichnet** sind, wobei zu der Vorrichtung wenigstens zwei, jeweils auf diese Trägerfrequenzen ansprechende Empfänger gehören, die jeweils über wenigstens zwei Anschlüsse mit Gleichstrom versorgt werden, **dadurch gekennzeichnet, dass** die oben erwähnten zwei Empfänger (2, 3) zwischen den zwei Polen einer gemeinsamen elektrischen Versorgungsquelle für Gleichstrom/Gleichspannung (13) in Reihe geschaltet sind, und zwar derart, dass einer der Anschlüsse des einen Empfängers an einen der Pole der Versorgungsquelle angeschlossen ist, einer der Anschlüsse des anderen Empfängers an den anderen Pol der Versorgungsquelle angeschlossen ist und die übrigen Anschlüsse der Empfänger miteinander verbunden sind.

2. Empfangsvorrichtung nach Anspruch 1, **dadurch gekennzeichnet, dass** die Versorgungsspannung mittels einer Spannungsteilerbrücke auf die beiden in Reihe geschalteten Empfängern aufgeteilt ist.

3. Empfangsvorrichtung gemäß einem der Ansprüche 1 oder 2, **dadurch gekennzeichnet, dass** die Vorrichtung ein Mittel aufweist, um an die vorgenannten gemeinsamen Anschlüsse der Empfänger eine Spannung anzulegen.

4. Empfangsvorrichtung nach einem der vorhergehenden Ansprüche, **dadurch gekennzeichnet, dass** jeder Empfänger (2, 3) mit seinem eigenen Mittel zur Regulierung seiner Betriebsspannung versehen ist.

5. Empfangsvorrichtung nach einem beliebigen der vorhergehenden Ansprüche, **dadurch gekennzeichnet, dass** zu der Vorrichtung gehören: ein erster Spannungsregler (16), der derart angeordnet ist, um die Spannung zwischen denjenigen vorgenannten Anschlüssen der Empfänger, die an den Polen der Versorgungsquelle angeschlossen sind, auf einen ersten vorgegebenen Wert zu regeln, und ein zweiter Spannungsregler (17), der geeignet angeschlossen ist, um die Spannung zwischen dem vorgenannten gemeinsamen Anschluss der Empfänger und demjenigen Anschluss des Empfängers, der an dem Pol der Versorgungsquelle mit dem geringeren Potential angeschlossen ist, auf einen zweiten vorbestimmten Wert zu regeln, wobei der vorbestimmte erste Wert größer ist als der vorbestimmte zweite Wert.

6. Empfangsvorrichtung nach Anspruch 5, **dadurch gekennzeichnet, dass** der oben genannte zweite Spannungsregler (17) unmittelbar an den Pol der Versorgungsquelle angeschlossen ist, der stromaufwärts des vorgenannten ersten Reglers liegt.

7. Empfangsvorrichtung nach Anspruch 5, **dadurch gekennzeichnet, dass** der vorgenannte zweite Regler (17) über den vorgenannten ersten Regler mit der Versorgungsquelle verbunden ist.

8. Empfangsvorrichtung nach einem beliebigen der vorhergehenden Ansprüche, **dadurch gekennzeichnet, dass** zu der Vorrichtung ein den Empfängern (2, 3) gemeinsames Betätigungsmittel (18) gehört, um die Empfänger zu veranlassen, zur gleichen Zeit in den Probemodus Empfang/Schlaf zu wechseln.

9. Empfangsvorrichtung nach einem der vorhergehenden Ansprüche, **dadurch gekennzeichnet, dass** mindestens einer der vorgenannten Empfänger ein Superheterodynempfänger ist.

10. Empfangsvorrichtung nach einem der vorhergehenden Ansprüche, **dadurch gekennzeichnet, dass** zumindest einer der Empfänger ein Superregenerativempfänger ist.

11. Empfangsvorrichtung nach einem der vorhergehenden Ansprüche, **dadurch gekennzeichnet, dass** die Empfänger (2, 3) Empfänger für elektromagnetische Wellen sind.

12. Empfangsvorrichtung nach Anspruch 1, **dadurch gekennzeichnet, dass** zu der Vorrichtung Mittel gehören, um die Spannung zwischen den genannten Anschlüssen der Empfänger (2, 3) auf zwei vorgegebenen unterschiedlichen Betriebsspannungswerten einzustellen, von denen der eine niedriger ist als der andere.

## Claims

1. A device for receiving signals, in particular radio signals, on at least two channels **characterized by** different carrier frequencies for each of the channels, comprising at least two receivers responsive to respective carrier frequencies and connected to a direct current electrical power supplied between at least two respective terminals, **characterized in that** the two receivers (2, 3) are disposed in series between the two poles of a common direct current electrical power supply (13) so that one terminal of one of said receivers is connected to one pole of the power supply, one terminal of the other receiver is connected to the other pole of the power supply and their other terminals are connected together.

2. A receiver device according to claim 1 **characterized in that** the supply voltage is divided between the two series-connected receivers by means of a voltage divider bridge.

3. A receiver device according to claim 1 or claim 2 **characterized in that** it comprises means for controlling the voltage at said common terminals of said receivers.

4. A receiver device according to any of the preceding claims **characterized in that** each receiver (2, 3) has its own means for regulating its operating voltage.

5. A receiver device according to any of the preceding claims **characterized in that** it comprises a first voltage regulator (16) adapted to regulate to a first particular value the voltage between said terminals of said receivers connected to the poles of the power supply and a second voltage regulator (17) adapted to regulate to a second predetermined value the voltage between said common terminal of said receivers and the terminal of the receiver connected to the lower potential pole of the power supply, said first predetermined value being greater than said second predetermined value.

6. A receiver device according to claim 5 **characterized in that** said second voltage regulator (17) is connected directly to the pole of the power supply on the input side of said first regulator.

7. A receiver device according to claim 5 **characterized in that** said second regulator (17) is connected to the power supply through said first regulator.

8. A receiver device according to any of the preceding claims **characterized in that** it comprises control means (18) common to said receivers (2, 3) adapted to control them simultaneously in sampled receive/dormant mode.

9. A receiver device according to any of the preceding claims **characterized in that** at least one of said receivers is a superheterodyne receiver.

10. A receiver device according to any of the preceding claims **characterized in that** at least one of said receivers is a superregenerative receiver.

11. A receiver device according to any of the preceding claims **characterized in that** said receivers (2, 3) are receivers of electromagnetic waves.

12. A device according to claim 1 **characterized in that** it comprises means for regulating the voltage between said terminals of said receivers (2, 3) to two different particular operating values, one of which is lower than the other.
